# EUROPEAN PATENT APPLICATION

(11) **EP 2 144 214 A1**
(43) Date of publication of application: **13.01.2010**
(21) Application number: 08740854.8
(22) Date of filing: 25.04.2008
(51) Int. Cl.: G08G 1/09, G01C 21/00, G06Q 50/00, H04Q 7/38

(54) **ON-VEHICLE DEVICE AND COMMUNICATION METHOD**

(30) Priority: 27.04.2007 JP 2007119200
(71) Applicant: Kabushiki Kaisha Kenwood, Hachioji-shi Tokyo 192-8525 (JP)
(72) Inventor: NAGATOMO, Hideyuki, Kanagawa 214-0023 (JP)
(74) Representative: Leinweber & Zimmermann
(86) International application number: PCT/JP2008/058052
(87) International publication number: WO 2008/139888

(57) **Abstract**

Disclosed is an on-vehicle device which can effectively and surely provide content information. The on-vehicle device includes a control unit which causes a feature information storage region to store feature information having predetermined items as information on the on-vehicle device features (step S1). When a radio communication channel is established between the on-vehicle device and a radio relay device by a DSRC communication unit, the on-vehicle device reads out the feature information from the feature information storage region and causes the DSRC communication unit to transmit it to the radio relay device (step S4).

## Description

### TECHNICAL FIELD

The present invention relates to an on-vehicle device and a communication method.

### BACKGROUND ART

Conventionally, an on-vehicle device such as a navigation apparatus can use DSRC (Dedicated Short Range Communication) and the like to perform a short range wireless communication with a radio relay device installed on a road so as to receive information provided by a server via the radio relay device (for example see Patent Document 1). In other words, only when a vehicle is in a communication range of the radio relay device, the on-vehicle device on the vehicle can communicate with the radio relay device in both ways, and at this moment, the server distributes various information such as advertisement information via the radio relay device.

The on-vehicle device displays the received information on a monitor, but the monitor may differ in the size and the display performance depending on the standard of the on-vehicle device. Nevertheless, since the information distributed by the server is always in the same display size and resolution and is distributed in one way, there may arise disadvantages in that the on-vehicle device cannot display the received information.

In some case, the size of the monitor, the display performance, and the like are designed for a particular vehicle in order to display information according to the interior design of the vehicle. In that case, the on-vehicle device appropriately configures the display color and the function of the monitor on the basis of function setting information corresponding to the vehicle (for example, see patent document 2).
Patent Document 1: Japanese Patent Application Laid-Open No. 2006-246377
Patent Document 2: Japanese Patent Application Laid-Open No. 2004-309418

### DISCLOSURE OF THE INVENTION

### PROBLEMS TO BE SOLVED BY THE INVENTION

According to the method of the above Patent Document 2, information distributed by the server might be displayed upon being changed according to the features of the monitor on the basis of the function setting information corresponding to the vehicle. But the server distributes a large amount of information which may include information not needed by a user, and therefore, it is inefficient to perform display processing for converting information into information suitable for display on the monitor every time information is received.

The technical object of the present invention is to provide a method for allowing the on-vehicle device to receive content information efficiently and surely.

### MEANS FOR SOLVING THE PROBLEMS

The on-vehicle device according to the present invention includes: communication means for communicating with a server distributing content information via a radio relay device; storage means for storing, in a storage region for storing information to be provided to the server, feature information having predetermined items as information relating to a device feature of the on-vehicle device; and control means for, when the communication means establishes a communication channel to the radio relay device, operating to read the feature information from the storage region and cause the communication means to transmit this read feature information to the server via the radio relay device.

Alternatively, the present invention may also be understood as communication processing performed on the on-vehicle device. In such case, the communication method according to the present invention essentially includes the steps of: communicating with a server distributing content information via a radio relay device; storing, in a storage region for storing information to be provided to the server, feature information having predetermined items as information relating to a device feature of the on-vehicle device; operating to read the feature information from the storage region and cause communication means to transmit this read feature information to the server via the radio relay device, when a communication channel to the radio relay device is established.

### EFFECTS OF THE INVENTION

According to the present invention, a server can obtain feature information about the on-vehicle device, and can distinguish a device feature of the on-vehicle device on the basis of this feature information. If the device feature is distinguished, the server can distribute content information compatible with the device feature of the on-vehicle device. Therefore, the on-vehicle device can be designed to reliably provide the content information to a user.

### BRIEF DESCRIPTION OF THE DRAWINGS

FIG. 1 is a figure showing a system configuration of a distribution system;
FIG. 2 is a figure illustrating a roadside area of a radio relay device of FIG. 1;
FIG. 3 is a figure showing a functional configuration of the on-vehicle device according to the present embodiment;
FIG. 4 is a figure showing an example of feature information stored in a feature information storage region; and
FIG. 5 is a figure illustrating a processing flow of the distribution system.

### DESCRIPTION OF SYMBOLS

- 1: DISTRIBUTION SYSTEM
- 10: SERVER
- 20: RADIO RELAY DEVICE
- 21: MAIN BODY APPARATUS
- 22: ANTENNA
- 30: ON-VEHICLE DEVICE
- 31: CONTROL UNIT
- 32: NAVIGATION UNIT
- 33: OPERATION UNIT
- 34: DISPLAY UNIT
- 35: STORAGE UNIT
- 36: DSRC UNIT
- 361: DSRC CONTROL UNIT
- 362: DSRC COMMUNICATION UNIT
- 363: STORAGE UNIT
- M: FEATURE INFORMATION STORAGE REGION
- 37: VICS MODULE

### BEST MODES FOR CARRYING OUT THE INVENTION

First, the configuration will be described.

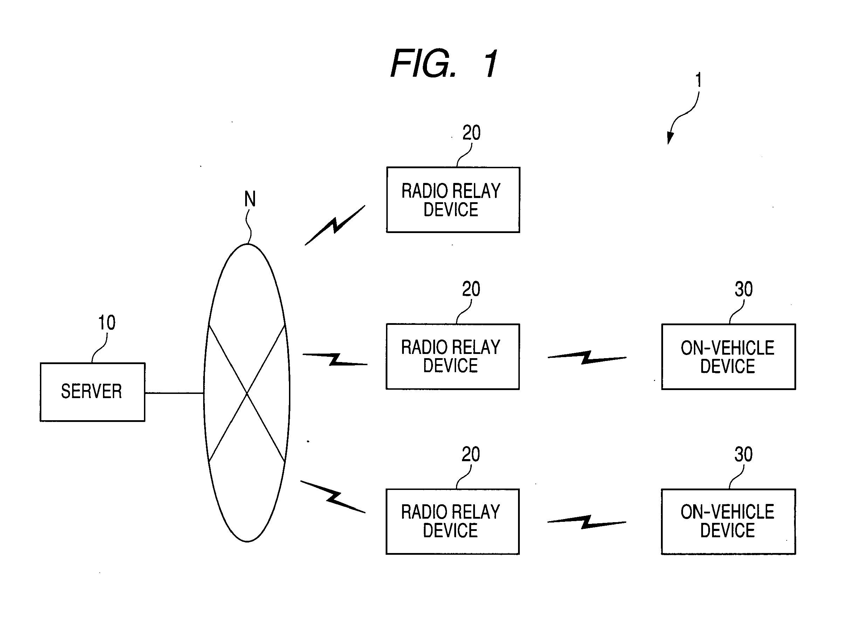

FIG. 1 shows the system configuration of a distribution system 1 including the on-vehicle device according to the present embodiment.

As shown in FIG. 1, the distribution system 1 includes a server 10, radio relay devices 20 installed on roads, and the on-vehicle device 30 mounted on a vehicle. The plurality of radio relay devices 20 are installed on roads, parking lots, and the like, and each of the radio relay devices 20 is connected to the server 10 via a network N. This radio relay device 20 installed on a road can communicate wirelessly with the on-vehicle device 30 of a vehicle running on the road.

In the distribution system 1, the server 10 distributes content information to the on-vehicle device 30 via the radio relay device 20. The content information is text information, image information, sound information, and the like provided to users, including various contents such as advertisements of shops, guidance on parking lots and a medical institutions, and the like.

Each of the apparatuses will be hereinafter described.

The server 10 stores content information, which is distributed to the on-vehicle device 30. The server 10 may be made of a computer terminal and the like having a control unit for performing distribution controls, a communication unit for communicating with the radio relay device 20, and a storage unit for storing content information.

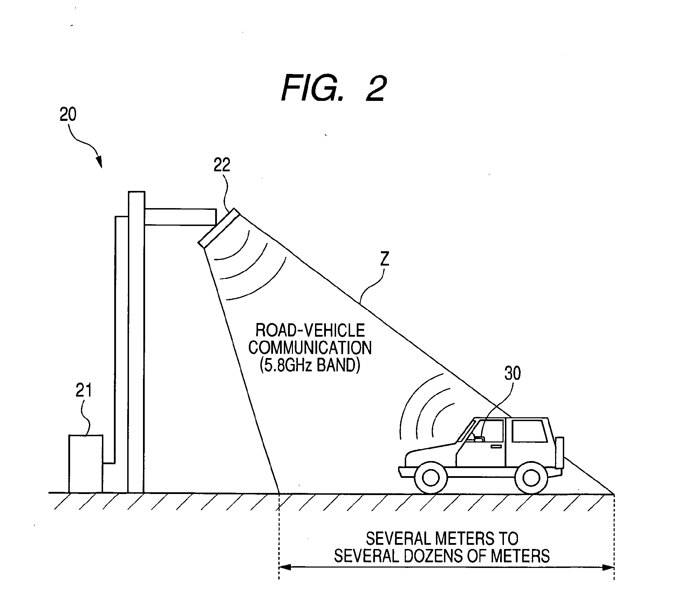

As shown in FIG. 2, the radio relay device 20 includes a main body apparatus 21 and an antenna 22. The radio relay device 20 transmits DSRC radio wave, whose range is limited, from the antenna 22 installed on the side of the road or above the road so as to form a roadside area Z near the radio relay device 20. The radio relay device 20 can perform a short-range two-way wireless communication with only the on-vehicle device 30 on the vehicle located in this roadside area Z. The short-range wireless communication between the radio relay device 20 and the on-vehicle device may be hereinafter referred to as a road-vehicle communication.

DSRC is a communication method using radio wave of 5.8GHz band, and the communication range thereof is, for example, several meters to several dozens of meters. The transmitting power of DSRC from either of the radio relay devices 20 is configured to be approximately the same, and accordingly, the roadside area Z formed by either of the plurality of radio relay devices 20 is approximately the same regardless of installation position and the like.

The main body apparatus 21 performs processing for mediating information exchanged between the on-vehicle device 30 and the server 10. In other words, the main body apparatus 21 transfers information received from the on-vehicle device 30 to the server 10 via the antenna, and transfers content information received from the server 10 to the on-vehicle device 30. The main body apparatus 21 may be made of a computer terminal having a control unit for performing information processing and communication controls, a storage unit, and the like.

The on-vehicle device 30 is mounted on a vehicle, and has not only a navigation function for performing processing for guiding a vehicle along a guide route but also functions for performing processing for using ETC (Electronic Toll Collection System) using DSRC.

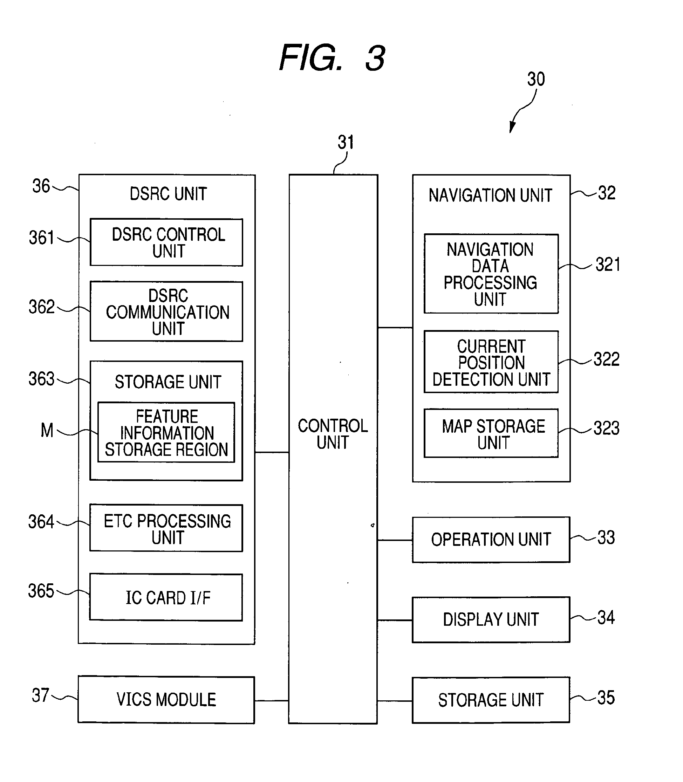

As shown in FIG. 3, the on-vehicle device 30 includes a control unit 31, a navigation unit 32, an operation unit 33, a display unit 34, a storage unit 35, a DSRC unit 36, and a VICS (Vehicle Information and Communication System) module 37.

The control unit 31 includes a CPU (Central Processing Unit), a RAM (Random Access Memory), and the like, and performs various calculations and centralized controls of various units by cooperating with control programs stored in the storage unit 35.

For example, when information about a guide route is input from the navigation unit 32 to the control unit 31, the control unit 31 generates a map screen for guiding a vehicle along the guide route and displays the map screen on the display unit 34.

Further, when the road-vehicle communication with the radio relay device 20 is performed, the control unit 31 controls communication operations of the DSRC unit 36. In this occasion, the control unit 31 performs controls by cooperating with a DSRC control unit 361 of the DSRC unit 36.

The navigation unit 32 includes a navigation data processing unit 321, a current position detection unit 322, a map storage unit 323, and the like, and performs processing for guiding the vehicle along the guide route.

The navigation data processing unit 321 calculates the guide route from the current position of the vehicle to a destination position on the basis of current position information obtained by the current position detection unit 322, map information stored in the map storage unit 323, and the like. The information about the calculated guide route and the like is output to the control unit 31.

The current position detection unit 322 has a GPS antenna and various sensors such as an angular sensor, an azimuth sensor, and a distance sensor, and detects the current position of the vehicle on the basis of the detection result of these sensors. The GPS antenna detects GPS signals transmitted by GPS satellites. The angular sensor detects the acceleration of the vehicle (a rotational speed per unit time in a horizontal direction) representing the variation in a moving direction. The azimuth sensor detects the terrestrial magnetism to detect the absolute direction of the vehicle. The current position detection unit 322 generates current position information (information about longitude, latitude, and the like) representing the current position of the vehicle on the basis of each of the detection results obtained by these sensors, and outputs the current position information to the navigation data processing unit 321.

The map storage unit 323 includes a recording medium such as a memory and a DVD, and stores, e.g., the map information needed for displaying guidance and guide information (road information, traffic jam information, and the like) received via the VICS module 37.

The operation unit 33 includes a touch panel and the like integrally made with operations keys and the display unit 34. The operation unit 33 generates operation signals corresponding to these operations, and outputs the operation signals to the control unit 31.

The display unit 34 includes a monitor, and displays various information on the monitor in accordance with controls of the control unit 31. For example, the display unit 34 displays a setting screen, a map screen, and a display screen displaying content information received from the server 10.

The storage unit 35 includes a recording medium such as a hard disk, and stores control programs executed by the control unit 31, parameters and data needed to execute the programs, and the like.

The DSRC unit 36 performs processing for using the ETC with the DSRC, communication processing for receiving content information from the server 10, and the like.

As shown in FIG. 3, the DSRC unit 36 includes a DSRC control unit 361, a DSRC communication unit 362, a storage unit 363, an ETC processing unit 364, and an IC (Integrated Circuit) card I/F 365.

The DSRC control unit 361 includes a CPU, a RAM, and the like, and controls each unit in the DSRC unit 36 by cooperating with the control programs stored in the storage unit 363.

For example, when a payment is made using the ETC, the DSRC control unit 361 controls communication operations of the DSRC communication unit 362 to transmit and receive payment information to and from an ETC base station (a wireless base station arranged near an ETC gate and the like for making a payment using the ETC). The DSRC control unit 361 causes the ETC processing unit 364 to perform a writing processing of the payment information and the like.

When content information is to be received from the server 10, the DSRC control unit 361 causes the DSRC communication unit 362 to transmit information stored in a feature information storage region M of the storage unit 363 to the radio relay device 20 in accordance with an instruction of the control unit 31. When the DSRC communication 362 receives the content information via the radio relay device 20, the DSRC control unit 361 outputs the content information to the control unit 31.

The DSRC communication unit 362 has an antenna fixed to the dashboard of the vehicle near the windshield, and transmits and receives the DSRC radio wave to and from the radio relay device 20, the ETC base station, and the like via this antenna.

The storage unit 363 stores control programs and the like executed by the DSRC control unit 361.

The storage unit 363 is arranged with the feature information storage region M. The feature information storage region M is a storage region arranged solely for providing information to the server 10, and feature information is stored therein. The feature information represents information about device features of the on-vehicle device 30. In this embodiment, it is desirable to store information about a human-machine interface among the device features. This is because the feature information affecting the providing of the content information to a user is to be provided to the server 10.

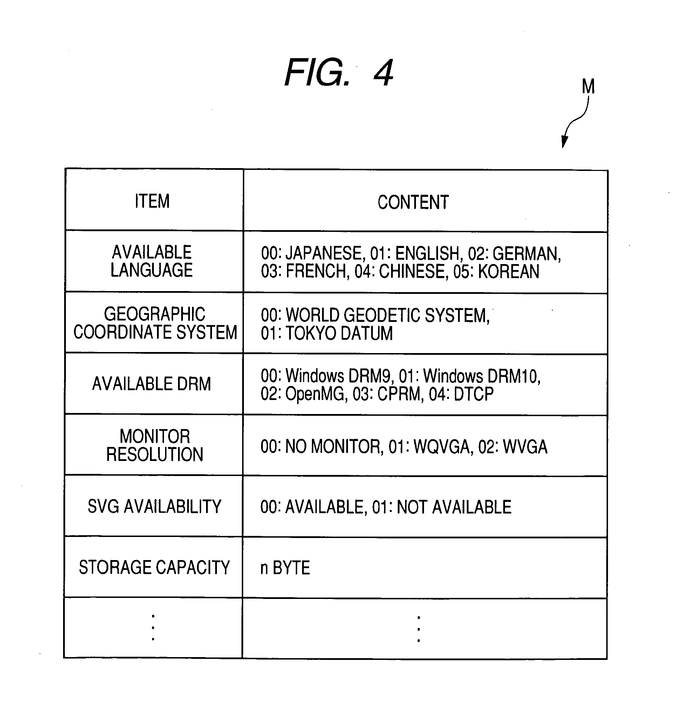

FIG. 4 shows an example of feature information stored in the feature information storage region M.

As shown in FIG. 4, the feature information storage region M stores items of the feature information and contents thereof. The items of the feature information and the contents thereof are previously determined with the server 10, and the contents are encoded.

The items include at least one of an available language, a geographic coordinate system, available DRM (Digital Rights Management), the monitor resolution, SVG (Scalable Vector Graphics) availability, and a storage capacity. Further, the content is represented by a code corresponding to each item. For example, in the available language item, if the available language is Japanese, the code is "00", and if the available language is English, the code is "01".

The available language represents a language that can be recognized and displayed by the on-vehicle device 30. The item of the available language previously has encoded codes for Japanese, English, German, French, Chinese, and Korean. The geographic coordinate system represents a geographic coordinate system of map information used by the on-vehicle device 30, and has codes for World Geodetic System and Tokyo Datum. The available DRM represents a digital copyright management technique employed by the on-vehicle device 30, and has codes for Windows (Registered Trademark) DRM9, Windows (Registered Trademark) DRM10, OpenMG, CPRM (Content Protection for Recordable Media), and DTCP (Digital Transmission Content Protection) technologies. The monitor resolution and the SVG availability represent the display performance of the display unit 34. The item of the monitor resolution has codes for no monitor (this is because the on-vehicle device may not be a speech-enabled on-vehicle device), WQVGA (Wide Quarter Video Graphics Array, a display device based on a standard of 400 by 234 dots), and WVGA (Wide Video Graphics Array, a display device based on a standard of 800 by 480 dots). The SVG availability has codes according to whether it is available or not. The storage capacity represents a storage capacity of the content information that the storage unit 35 can store. Only in the item of the storage capacity, the item is not represented by a code but is represented by a numeral n indicating the storage capacity (unit: byte).

The ETC processing unit 364 reads and writes payment information and the like to and from an IC-attached credit card, a debit card, and the like inserted into and removed from the IC card I/F 365.

The IC card I/F 365 has a slot for the above credit card and the like, and mediates information exchanged between the IC on the credit card and the like inserted into the slot and the ETC processing unit 364.

The VICS module 37 has antennas respectively for optical communication, FM communication, and 2.4GHz radio communication, and performs optical communication, FM communication, and radio communication with the VICS center. The VICS module 37 receives traffic jam information, road traffic information, and the like from a VICS center, and outputs such information to the control unit 31.

Next, the operation of the distribution system 1 will be described.

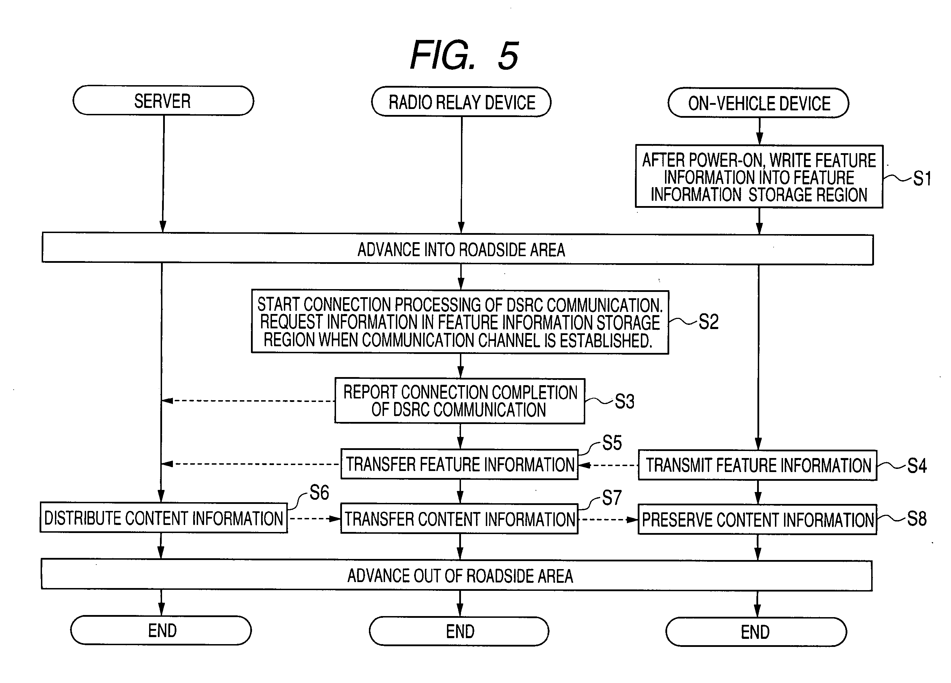

FIG. 5 is a flowchart illustrating a flow of processing performed by the server 10, the radio relay device 20, and the on-vehicle device 30 when the content information is distributed.

As shown in FIG. 5, when the engine of the vehicle is started and the power of the on-vehicle device is turned on, the control unit 31 generates feature information about the on-vehicle device 30, and writes the feature information into the feature information storage region M of the storage unit 363 (step S1). The control unit 31 inquires of each unit such as the display unit 34 about the item previously determined by the server 10, so that the feature information is obtained. Further, the control unit 31 encodes the obtained information, and writes a corresponding code into a region corresponding to each item of the feature information storage region M (see FIG. 4). Specifically, the control unit 31 outputs to the DSRC control unit 361 control information for instructing the DSRC control unit 361 to write information, and this DSRC control unit 361 actually writes the information into the feature information storage region M.

Thereafter, the vehicle starts to run, and is assumed to advance into the roadside area Z of the radio relay device 20 arranged on a road side. In the present embodiment, the server 10 does not distribute, in one way, the content information to the on-vehicle device 30 in the roadside area Z, but an example will be explained where the server 10 distributes the content information after information is once exchanged between the server 10 and the on-vehicle device 30. It takes some time to exchange this information, and therefore, it is desirable to perform this processing when a vehicle advances into a roadside area Z of a radio relay device 20 installed at a position where the vehicle stops or runs slowly, such as a parking lot and a side of a road.

When the radio relay device 20 detects that the vehicle has advanced into the roadside area Z, the radio relay device 20 starts a connection processing performed by the DSRC communication. In other words, the radio relay device 20 transmits the DSRC radio wave, and when the radio relay device 20 receives a response from the on-vehicle device 30, the radio relay device 20 establishes a communication channel. When the communication channel is established, the radio relay device 20 generates request information for requesting information stored in the feature information storage region M, and transmits the request information to the on-vehicle device 30 (step S2). On the other hand, the radio relay device 20 generates notification information indicating that the communication connection with the on-vehicle device 30 using the DSRC has been finished, and transmits the notification information to the server 10 (step S3).

When the control unit 31 of the on-vehicle device 30 receives the request information, the control unit 31 generates control information for instructing the DSRC control unit 361 to transmit the information stored in the feature information storage region M to the radio relay device 20, and outputs the control information to the DSRC control unit 361. When the DSRC control unit 361 receives the control information, the DSRC control unit 361 causes the DSRC communication unit 362 to transmit the feature information stored in the feature information storage region M of the storage unit 363 to the radio relay device 20 (step S4).

The radio relay device 20 transfers the feature information received from the on-vehicle device 30 to the server 10 (step S5).

The server 10 determines the feature of the on-vehicle device 30 on the basis of the feature information transferred from the radio relay device 20. Since each predetermined item in the feature information includes a code representing a content thereof, the server 10 can determine the content of each item by decoding the code. Further, the server 10 prepares content information according to the feature distinguished by the server 10. In the preparation, the data size of the content information stored in the storage unit of the server 10 is previously reduced or enlarged in accordance with, for example, the monitor resolution of the display unit 34 of the on-vehicle device 30, so that the content information is converted into content information that can be displayed by the on-vehicle device 30. Alternatively, among the content information having different data sizes previously prepared for each display performance, only the content information having the data size corresponding to the monitor resolution of the on-vehicle device 30 may be read out from the storage unit. Further, among the content information prepared for different languages, the content information corresponding to the language used by the on-vehicle device 30 may be read out from the storage unit. In this way, the server 10 transmits the prepared content information to the radio relay device 20. In other words, the content information is distributed to the on-vehicle device 30 via the radio relay device 20 (step S6).

The radio relay device 20 receives the content information from the server 10, and transfers the received content information to the on-vehicle device 30 (step S7). When the on-vehicle device 30 receives the content information from the radio relay device 20 via the DSRC communication unit 362, the control unit 31 stores and preserves the content information in the storage unit 35 (step S8). The control unit 31 causes the display unit 34 to display the preserved content information.

Thereafter, when the vehicle runs and advances out of the roadside area Z, the DSRC communication between the radio relay device 20 and the on-vehicle device 30 is disconnected, and this processing is finished upon this disconnection.

The above processing is executed every time the vehicle advances into the roadside area Z of the radio relay device 20.

As described above, according to the present embodiment, the feature information storage region M is arranged in the storage unit 363, and the feature information about the on-vehicle device 30 is previously stored therein, so that the feature information about the on-vehicle device 30 can be provided to the server 10. When a communication channel to the radio relay device 20 is established, the information stored in the feature information storage region M, i.e., the feature information, is transmitted from the on-vehicle device 30 to the server 10 via the radio relay device 20. Therefore, the server 10 can refer to the feature information, and can distinguish the device feature of the on-vehicle device 30. If the device feature can be distinguished, the content information suitable for the device feature of the on-vehicle device 30 can be distributed. Therefore, the on-vehicle device 30 can reliably provide the content information to a user.

The items of the feature information and the contents thereof are previously determined by the on-vehicle device 30 and the server 10. Therefore, the server 10 can easily distinguish the feature information received from the on-vehicle device 30, and therefore, the processing for distributing the content information can be performed smoothly.

Further, the feature information includes at least either of the available language, the geographic coordinate system, the available DRM (Digital Rights Management), the monitor resolution, the SVG (Scalable Vector Graphics) availability, and the storage capacity. If the available language of the content information agrees with that of the on-vehicle device 30, at least texts of the content information can be provided to a user. If the geographic coordinate system agrees, map information of the content information can be provided to the user. Further, if the available DRM agrees, the content information can be provided under the restriction of the copyright protection. If the monitor resolution and the SVG availability agree, the content information can be reliably displayed on the on-vehicle device 30. Further, if the server 10 previously knows the storage capacity, the server 10 can adjust the amount of information to be distributed. Therefore, it is possible to prevent such a problem that the on-vehicle device 30 deletes the content information and fails to provide it to the user even though the content information has been distributed.

The above embodiment is an example of preferred embodiments of the present invention, and the present invention is not limited thereto.

For example, in the present embodiment, the control unit 31 is configured to generate the feature information and write the generated feature information into the feature information storage region M every time the power of the on-vehicle device 30 is turned on. As a result of such configuration, even when the monitor of the display unit 34 is replaced and the display performance is changed, or even when the language setting used by the on-vehicle device 30 is changed, the device feature after the change can be notified to the server 10.

Alternatively, when there is no plan to change the device feature, the processing efficiency can be improved by previously storing the feature information in the feature information storage region M without writing the feature information one by one.

## Claims

1. An on-vehicle device comprising:
communication means for communicating with a server distributing content information via a radio relay device;
storage means for storing, in a storage region for storing information to be provided to the server, feature information having predetermined items as information relating to a device feature of the on-vehicle device; and
control means for, when the communication means establishes a communication channel to the radio relay device, operating to read the feature information from the storage region and cause the communication means to transmit this read feature information to the server via the radio relay device.

2. The on-vehicle device according to claim 1, wherein the feature information includes at least one of a language available on the on-vehicle device, a copyright protection technique, a geographic coordinate system of a map, a display performance of the on-vehicle device, and a storage capacity of the content information that can be stored.

3. The on-vehicle device according to claim 1 or 2, wherein the control means generates the feature information and stores the feature information in the storage region, and when the communication means establishes a communication channel to the radio relay device, the control means operates to read the feature information from the storage region and causes the communication means to transmit this read feature information to the server via the radio relay device.

4. A method including the steps of:
communicating with a server distributing content information via a radio relay device;
storing, in a storage region for storing information to be provided to the server, feature information having predetermined items as information relating to a device feature of the on-vehicle device;
operating to read the feature information from the storage region and cause the communication means to transmit this read feature information to the server via the radio relay device, when a communication channel to the radio relay device is established.
